(19) Europäisches Patentamt
European Patent Office
Office européen des brevets

(11) **EP 3 584 784 A1**

(12) **EUROPEAN PATENT APPLICATION**

(43) Date of publication:
**25.12.2019 Bulletin 2019/52**

(51) Int Cl.:
***G09G 3/32*** *(2016.01)*

(21) Application number: **18305760.3**

(22) Date of filing: **19.06.2018**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **InterDigital VC Holdings, Inc.
Wilmington, DE 19809 (US)**

(72) Inventors:
• **ANDRIVON, Pierre**
  **35576 Cesson-Sévigné (FR)**
• **MORVAN, Patrick**
  **35576 Cesson-Sévigné (FR)**
• **THEBAULT, Cédric**
  **35576 Cesson-Sévigné (FR)**

(74) Representative: **Huchet, Anne et al
InterDigital CE Patent Holdings
20, rue Rouget de Lisle
92130 Issy-les-Moulineaux (FR)**

(54) **METHOD AND APPARATUS FOR PROCESSING VIDEO SIGNALS AGAINST BLUE LIGHT HAZARD**

(57)     The invention related to a method for color processing in view of displaying a video image on a display device. It comprises:
- retrieving (S1) a spectral power distribution associated with at least one group of light elements of the display device, said group of light elements displaying a color component of the video image to be displayed,
- computing (S2), in a range of said spectral power distribution, called range of noxiousness, a noxiousness value representative of the noxiousness of the light emitted by the group of light elements of the display device,
- comparing (S3) said noxiousness value to a bound value of noxiousness, and
- if said noxiousness value is greater than said bound value, modifying (S4) the content of the image or modifying display control parameters of the display device such that said noxiousness value becomes less than said bound value.

FIG.4

EP 3 584 784 A1

S1 — Retrieving a spectral power distribution (SPD) of at least one group of light elements of the display device

S2 — Computing, in a predetermined range of said SPD, a noxiousness value

S3 — Comparing the noxiousness value to a noxiousness threshold

S4 — if the noxiousness value is greater than the noxiousness threshold, modifying the content of said at least one video image or modifying display control parameters of the display

FIG.5

**Description**

**1. Technical Field**

The present invention relates to video signal processing and displays, and more specifically displays designed with high-energy visible light technologies such as LED or OLED.

**2. Background Art**

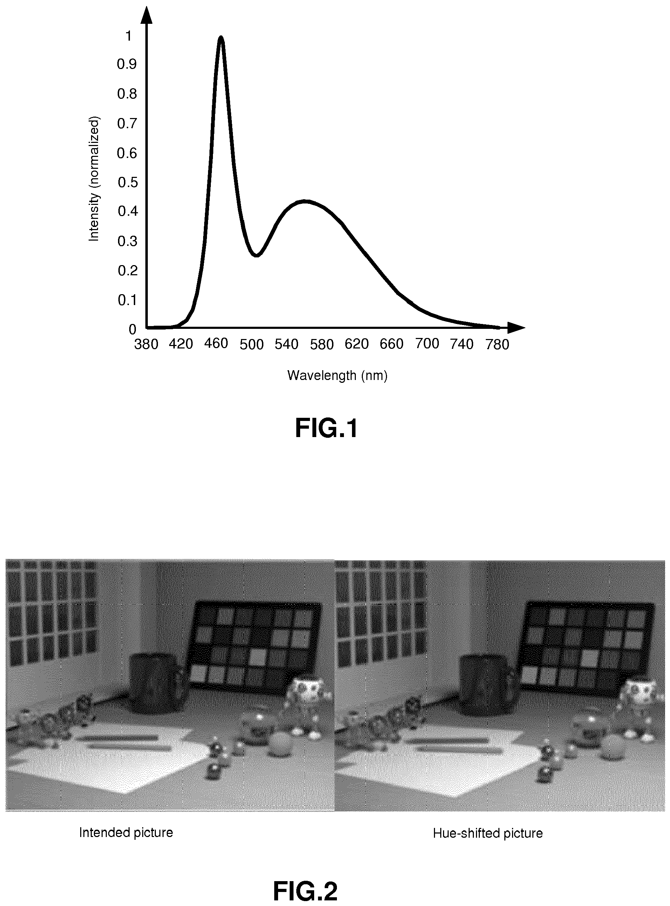

Displays are composed of three subpixels with blue, red and green colors. Blue/violet light emitted by high-energy visible light displays such as LED-based displays is currently questioned in terms of innocuousness for the human eye; especially for children. These 3 main colors are generally generated from a white light (white LED) filtered by a dedicated filter (blue, red or green filter). White LED intensity spectrum reveals high energy peaks in the blue region as illustrated by **Figure 1.** This figure shows a peak of emission around 450-470 nm with a full width at half maximum of 30-40 nm that has been proven to be damageable for some cells eyes under certain conditions. High Dynamic Range imaging is a major trend enabling dramatic contrast enhancement notably with higher luminance peaks (up to several hundreds of candelas per square meter). As HDR (high Dynamic Range) display technology is mostly based on LED and OLED displays, risks for the eyes may increase as well. Besides, Virtual Reality (VR) headset displays stand very close to the eye and only few tens of cd/m$^2$ luminance displayed on this close luminous surface may be considered by the eye (that integrates on the whole visible surface) as a very high luminous magnitude.

Some studies have thus shown that a prolonged exposure to blue light generated by OLED or LED displays may permanently damage the pigment epithelial cells of the retina. Other studies also show that another effect of blue color (not especially for LED/OLED displays) is the perturbation of the nycthemeral cycle. These studies show that blue light spectrum action is most effective for wavelength range of 460 - 490 nm.

Different solutions have been proposed to address these problems. A solution can be implemented at a display level, a hardware level or at a software level.

At a display level, the display settings can for example be adjusted such that the color temperature and the brightness of the display in the blue light region is decreased. But this solution is problematic because it lowers contrast while the display era trend is High Dynamic Range imaging.

At a hardware level, the solution can consist in adding optical filters (on the display device or worn by the viewer) to protect the eye.

At a software level, the solution can also consist in shifting the colors of an image to be displayed toward a color illumination characterizing the "end of the day", typically reddish colors removing as much as possible the blue contribution and consequently decreasing eyestrain. This processing can be made either at the operating system level (e.g. "night shift" for Apple products or "night light" for Android-based platforms) or at an applicative level (e.g. f.lux software...).

Such hue-shift and general colors deviation techniques are not intended for color-sensitive work and do not preserve the original picture look as illustrated by **Figure 2.** The left image shows the intended picture look and the right image shows the hue-shifted picture.

So, there is a need to propose a method for reducing the noxiousness of the high Energy Visible Light (HEVL) emitted by display devices in the blue light region while preserving the look of the displayed images.

**3. Summary**

The present disclosure proposes to adapt the content of the images to be displayed or to adapt the display control parameters of the display device as a function of a noxiousness value (or risk value) computed from spectral power distribution (SPD) data of the display device. The images or the display are (is) amended such that the noxiousness value becomes less than a bound value of noxiousness (or a noxiousness threshold).

The present disclosure relates to a method for color processing in view of displaying at least one video image on a display device, said method comprising the steps of:

- retrieving a spectral power distribution associated with at least one group of light elements of the display device, said group of light elements displaying a color component of said at least one video image to be displayed,
- computing, in a range of said spectral power distribution, called range of noxiousness, a noxiousness value, said noxiousness value being representative of the noxiousness of the light emitted by said at least one group of light elements of the display device,
- comparing said noxiousness value to a bound value of noxiousness, and
- if said noxiousness value is greater than said bound value, modifying the content of said at least one video image or modifying display control parameters of the display device such that said noxiousness value becomes less than said bound value.

The magnitude of the high energy visible light (HEVL) on the range of noxiousness is thus reduced while preserving the intended look of the image to be displayed. The color processing is not applied systematically but only when the noxiousness value is greater than the bound value (noxiousness threshold) and the modifications provided to the content to be displayed or to the display control parameters of the display device are not predefined but adapted to make the noxiousness value become less than the bound value.

According to an embodiment, the range of noxiousness is [400nm-500nm] and preferably [460nm-490nm].

According to an embodiment, said at least one color component displayed by the display device is a blue component.

According to an embodiment, said at least one color component displayed by the display device are a blue component, a red component and a green component.

According to an embodiment, the noxiousness value is based on the energy level of the light emitted by said at least one group of light elements of the display device.

According to an embodiment, the noxiousness value is based on the energy level of the light emitted by said at least one group of light elements of the display device and on the content of said at least one video image.

According to an embodiment, the noxiousness value is based on histograms of color values associated with said at least one color component in said at least one video image.

According to an embodiment, said at least one video image being part of a global video content, the noxiousness value is based on histograms of color values associated with said at least one color component in said global video content.

According to an embodiment, the bound value (noxiousness threshold) is depending on user parameters and/or environmental viewing conditions.

According to an embodiment, the step of modifying the content of said at least one video image comprises modifying the colors of said at least one video image and/or adjusting the white point of said at least one video image.

According to an embodiment, the step of retrieving a spectral power distribution associated with at least one color component displayed by the display device comprises:

- receiving spectral power distribution data modelling said spectral power distribution associated with at least one color component displayed by the display device; and
- regenerating said spectral power distribution based on said spectral power distribution data.

According to an embodiment, the spectral power distribution data are one of the following data:

- a histogram representation
- a Gaussian Mixture Model;
- a mixture of Bezier curves; and
- a mixture of B-Splines.

The present disclosure also relates to a device for color processing in view of displaying at least one video image on a display device, said device being configured to:

- retrieve a spectral power distribution associated with at least one group of light elements of the display device, said group of light elements displaying a color component of said at least one video image to be displayed,
- compute, in a range of said spectral power distribution, called range of noxiousness, a noxiousness value, said noxiousness value being representative of the noxiousness of the light emitted by said at least one group of light elements of the display device,
- compare said noxiousness value to a bound value of noxiousness, and
- if said noxiousness value is greater than said bound value, modify the content of said at least one video image or modify display control parameters of the display device such that said noxiousness value becomes less than said bound value.

The present disclosure also relates to a computer program product comprising program code instructions for implementing the method as defined above, when said program is executed on a computer or a processor

The present disclosure also relates to a non-transitory computer-readable storage medium storing a computer program product as defined above.

The present disclosure also relates to a video signal comprising spectral power distribution associated with at least one group of light elements of the display device, said group of light elements displaying a color component of said at least one video image to be displayed.

## 4. Brief description of the drawings

The invention can be better understood with reference to the following description and drawings, given by way of example and not limiting the scope of protection, and in which:

- Figure 1, already described, is a curve illustrating the light intensity emitted by a white LED according to the visible light range [380nm, 780nm];

- Figure 2, already described, shows two pictures illustrating color distortions introduced by hue-shift techniques;

- Figure 3 is a schematic view of a global architecture of a system for displaying video content and comprising means for color processing according to one embodiment of the invention;

- Figure 4 represents curves illustrating the light intensity emitted by a blue LED, a red LED and a green LED according to the visible light range [380nm, 780nm];

- Figure 5 is a flow chart illustrating the color processing steps according to one embodiment of the invention; and

- Figure 6 represents an exemplary architecture of a color processing module or device according to one embodiment of the invention.

The components in the figures are not necessarily to scale, emphasis instead being placed upon illustrating the principles of the invention.

## 5. Description of embodiments

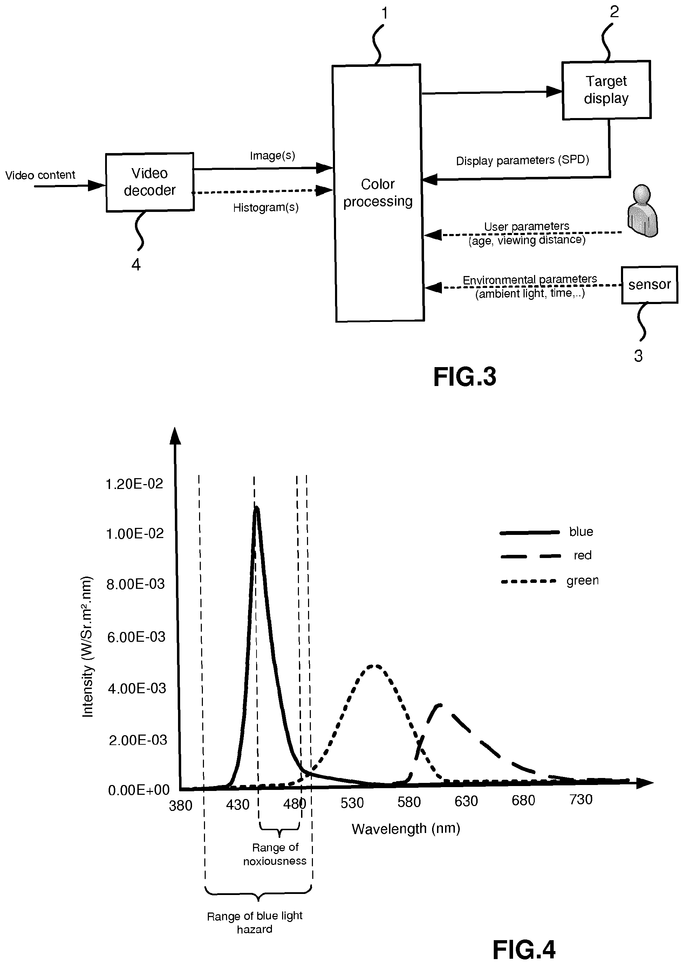

**Figure 3** is a schematic view illustrating the color processing used for reducing the High Energy Visible Lights (HEVL) in a given wavelength range emitted by a display device when displaying a video content on said display device.
The proposed method consists in driving a specific color processing for images to be displayed on a target display device as a function of display parameters (Spectral Power Distribution of the color components of the display device). Advantageously, the specific color processing also depends on the video content to be displayed and/or user parameters (age, viewing distance) and/or environmental conditions parameters (ambient light temperature, time).
As visible on Figure 3, the color processing is implemented in a color processing module 1 receiving video images to be displayed on a target device 2. The color processing module 1 modifies the video images or display control parameters of the target display device 2 as a function of:

- display parameters (SPD) received from the target display device 2; and/or
- user parameters such as the age of the user and/or a viewing distance (captured by a sensor) and/or a watching time and/or the exposure time of the eye of the viewer in front of the display; and/or
- environmental conditions parameters, such as Correlated Color Temperature (CCT) of the ambient light, received from a sensor 3; and/or
- metadata (for example, histograms) related to the video content to be displayed.

The images to be displayed on the target display 2 are derived from a video content decoded by a video decoder 4. The video content may comprise metadata, like histograms, related to the video content. These metadata are decoded by the video decoder 4 together with the video data. The images can be HDR (High Dynamic Range) images or SDR (Standard Dynamic Range) images.
The color processing module 1 may be part of the target display device 2 or may be external to the target display device 2. In the latter case, it may be for example integrated into a set-top box.
The target display device 2 is a high-energy visible light displays such as a LED-based display or an OLED-based display. The target display device 3 comprises LEDs (or light elements) of different colours and more specifically blue LEDs, red LEDs and green LEDs. Each colour LED has a dedicated Spectral Power Distribution (SPD). In the present document, blue LEDs designate LEDs emitting blue light or white LEDs (emitting white) equipped with a blue filter. Likewise, red LEDs designate LEDs emitting red light or white LEDs equipped with a red filter and green LEDs designate LEDs emitting green light or white LEDs equipped with a green filter.
Examples of Spectral Power Distributions (SPD) are illustrated by the curves of **Figure 4.** This figure shows one curve for the blue LEDs, one curve for the red LEDs and one curve for the green LEDs of the display device. As visible on this Figure, High Energy Visible light is mainly emitted by the blue LEDs of the target display between 400nm and 500 nm (blue-light hazard). A part of this zone (the zone comprised between 460 nm and 490 nm) is considered as being noxious and critical for the eyes as mentioned in the background part of this document.

The method proposed in the present disclosure aims at reducing the High Energy Visible Lights (HEVL) in this critical zone.

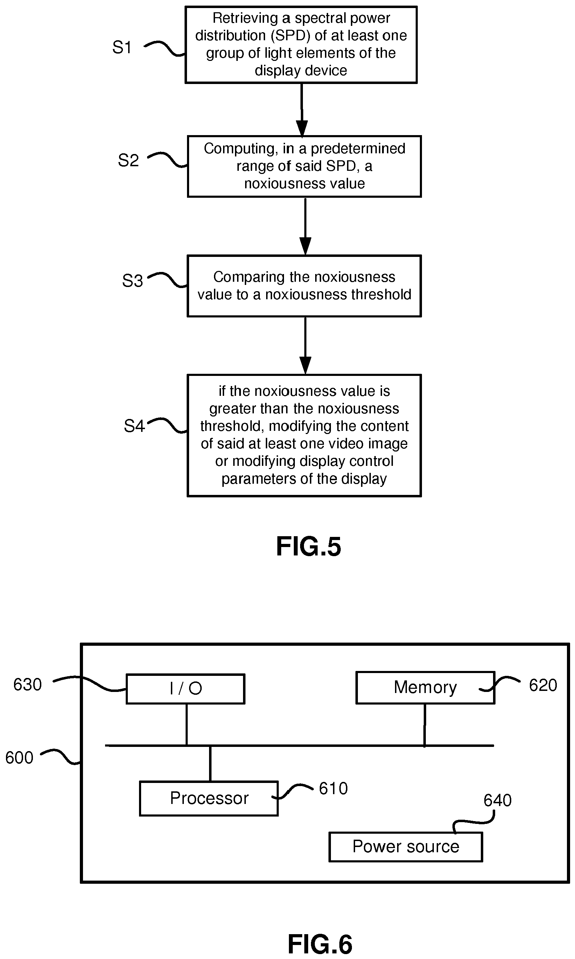

In reference to **Figure 5,** the method comprises the following steps:

- step S1: retrieving a spectral power distribution (SPD) associated with at least one group of light elements of the display device,
- step S2: computing, in a range of said spectral power distribution, called range of noxiousness, a noxiousness value, said noxiousness value being representative of the noxiousness of the light emitted by said at least one group of light elements of the display device,
- step S3: comparing said noxiousness value to a noxiousness threshold (or bound value of noxiousness), and
- step S4: if said noxiousness value is greater than said noxiousness threshold, modifying the content of the video image to be displayed or modifying display control parameters of the display device such that the noxiousness value becomes less than the noxiousness threshold.

These steps are described hereinafter in more detail.

Step S1

In step S1, the spectral power distribution (SPD) associated with the LEDs (of different colors) of the display device, is retrieved by the color processing module 1.

According to an embodiment, as the main part of the light emitted in the critical zone mentioned above is emitted by the blue LEDs, at least the spectral power distribution (SPD) associated with the blue LEDs (of different colors) is retrieved.

According to another embodiment, the spectral power distribution (SPD) associated with at least the red LEDs and/or the green LEDs is retrieved.

If the color processing module 1 is part of the target display device 2, the SPDs are directly available without the need to be transmitted. If the color processing module 1 is external to the target display device 2, the SPDs are transmitted to the color processing module 1 via Extended Display Identification Data (EDID) on HDMI link for example. The SPDs may be in a discrete data format or in a format modelled or weighted by a parametric model, like a Gaussian model, a Gaussian Mixture Model (GMM), a mixture of Bezier curves or a mixture of B-Splines.

In case of GMMs, one or a plurality Gaussian functions may be used for representing the SPD of one colour of LEDs. For example, 3 Gaussian functions may be used for characterizing the SPD of the blue LEDs. Each Gaussian function in the mixture may be characterized by the following parameters:

- the mean of the Gaussian function which is equal to the wavelength of the peak value of the SPD;
- the variance of the Gaussian function which is equal to the standard deviation of the SPD at the half maximum; and
- the weight of the Gaussian function in the mixture.

These modelled SPDs may also be encoded for further reducing the quantity of data transmitted. For example, the mean value can be reduced by subtracting a reference mean. Indeed, there might be typically as many Gaussian peaks number as colour components number (e.g. 3) representative of the spectrum contribution of each subpixel composing each (logical) pixel of the display. Typically, (Gaussian) peaks will be located around blue, red and green wavelength; respectively around 450 nm, 620 nm, 510 nm. These typical/template values may be subtracted from the Gaussian mean value to be carried in order to carry a low magnitude value. The subtraction result may be quantized to match precision requirements. An example of such encoding is given below:
where:

$$M_c = INT\left(\frac{(TMean_c - GMean_c)}{Qscale}\right)$$

- the subscript c indicates the c-th component or c-th Gaussian curve composing the GMM with e.g. c = 0, 1, 2 respectively representing R, G and B subpixel/components values;
- $M_c$ is the carried/coded mean value representative of the c-th component;

- INT(x) represent the integer value of x (positive or negative);
- $TMean_c$ is the template mean value of the c-th component (e.g. here: TMean0 = 620, TMean1 = 510, TMean2 = 450);
- $GMean_c$ is the mean of the c-th Gaussian curve composing the GMM;
- Qscale is a quantization factor representative of the required precision of Mc (e.g. Qscale = 8).

A similar mechanism may be considered for encoding the variance. Weight may be carried as an index in a table (e.g. an index indicating pre-determined weight).

Step S2

By referring back to the figure 5, in a step S2, a noxiousness value is computed on the range of the SPD which is considered as being noxious for the eyes. This range is called hereinafter range of noxiousness. This range may be comprised between 400 nm and 500 nm and advantageously comprised between 450 nm and 490 nm. In a preferred embodiment, the range of noxiousness is [460 nm - 490 nm] as illustrated on Fig.4. These range bounds may be provided by the display device and communicated via EDID.

According to one embodiment, a noxiousness value $V_N$ representative of the risk, in term of noxiousness, of a target display according to its SPD characteristics is computed as the sum of the risk over the three R, G and B components as follows:
where:

$$V_N = \sum_{c=0}^{2} V_{N,c} = \sum_{c=0}^{2} \int_{\omega_{inf}}^{\omega_{sup}} \left( \alpha(c).SPD(\omega,c) + \beta(c) \right).d\omega$$

- $\omega_{sup}$ and $\omega_{inf}$ are respectively the upper and lower wavelength limits of the range of noxiousness; in a preferred embodiment, $\omega_{sup}$=490 nm and $\omega_{inf}$=450 nm;
- c is an index associated with a color component; for instance, c=0 for the red component, c=1 for the green component and c=2 for the blue component;
- SPD($\omega$,c) is the SPD associated with the light elements used to display the color component c; for instance, SPD is represented by values uniformly spaced (every 10nm) on the visible spectrum with 8 bits precision; those values may have been reconstructed from a model (SPD modelled by parameters) as explained above;
- $\alpha$(c) is a weighting function for the color component c; for instance, this weighting function is a coefficient/gain with typically a constant value in [0, 1] or a Gaussian window characterized by a mean and a standard deviation; as another example this weighting function depends on the luminance characteristics of the display (typically the higher the maximum luminance, the higher $V_N$ should be) and
- $\beta$(c) is an offset of the color component c with typically a constant value in [-1, 1]; $\beta$ may be a term representative of an environmental illumination system or an ambient lighting system emitting light around the target display and that would lower or increase the risk e.g. an "Ambilight" system part of the target display and that would emit light neutralizing blue light hazard or that would emit blue light in the blue light hazard spectrum; in some embodiments, this offset is equal to zero.

According to an embodiment, as red LEDs and green LEDs emit less light in the range of noxiousness (see Figure 4), the noxiousness value $V_N$ is computed based only on the SPD linked to the blue LEDs. In this embodiment, $\alpha$(2)= 1 and $\alpha$(0)= $\alpha$(1)=0.

According to another embodiment, the noxiousness value is evaluated against a given R, G, B triplet as follows:
where

$$V_N\left(R_i, G_j, B_k\right) = R_i.V_{N,R}(R_i) + G_j.V_{N,G}(G_j) + B_k.V_{N,B}(B_k)$$

$$V_{N,X}(X_y) = SPD_X\left(X_y\right)$$

with $SPD_x(X_y)$ the sample value $X_y$ evaluated with the SPD associated to the light element used to display the color component X.

In this embodiment, $V_N(R_i,G_j,B_k)$ is a local noxiousness value computed for a given triplet $(R_i,G_j,B_k)$ while $V_N$ in the previous embodiment is a global noxiousness value.

According to an embodiment, since the risk of damaging the eyes of a viewer also depends on the content of the image to be displayed (in case of an OLED or LED target display, if the image to be displayed does not comprise any blue colors or any colors comprising blue component, there is no risk of damaging the eyes), the computed noxiousness value $V_N$ is also based on the characteristics of the content to be displayed. In this embodiment, the noxiousness value $V_N$ is for example computed based on color characteristics of the content (the video image or the whole content) to be displayed.

For example, a histogram H computed on at least a significant portion of the content to be displayed is precomputed and used in the computation of the noxiousness value $V_N$. The histogram may be computed on the whole content.

According to an embodiment, the histogram H stores the occurrence of colors over the whole content and is computed as follows:

where:

$$H(i,j,k) = \sum_{t} \sum_{x,y} \delta\big(R_{x,y} \in [R_i, R_{i+1}[ \wedge G_{x,y} \in [G_j, G_{j+1}[ \wedge B_{x,y} \in [B_k, B_{k+1}[\big)$$

$$= \sum_{t} \sum_{x,y} \delta_{[R_i, R_{i+1}[\times[G_j, G_{j+1}[\times[B_k, B_{k+1}[}\big(R_{x,y}, G_{x,y}, B_{x,y}\big)$$

- $H(i,j,k)$ represents the sum over the time (or over several images of the content) of the number of pixels of the whole content having a color inside the 3D RGB cube $[R_i, R_{i+1}[\times[G_j, G_{j+1}[\times[B_k, B_{k+1}[$ or a portion of the 3D RGB cube;
- $\delta$ is the Kronecker delta; and
- $i, j$ and $k$ are indices that may be in the range 0 to 7; this corresponds to a (8x8x8=512) 512 bins histogram.

The histogram may be quantized on 8 bits (e.g. using the 8 Most Significant Bits of the values of the different bins).

The histogram $H$ is typically computed in post-production environment and communicated to the color processing module.

In the case of a noxiousness value $V_N$ taking into account the content to be displayed, the noxiousness value, noted $V'_N$, may be defined as follows:

$$V'_N = \sum_{i,j,k} H(i,j,k) . V_N\big(R_i, G_j, B_k\big)$$

In this embodiment, the noxiousness value for a given target display is weighted by the histogram of the whole content. As a consequence, for a content which histogram has a little portion of blue color, the noxiousness value will be lower than the noxiousness value computed for a content which histogram has a bigger portion of blue color.

As another example, a blue value (Bv) representative of the brightness of content or representative of the presence or risk of the blue component related colors of the image to be displayed is computed with the intent to weight the display noxiousness value against this content noxiousness value. This blue value may be computed over the whole content. In this embodiment, the noxiousness value $V'_N$ is computed based on color characteristics of the content (the video image or the whole content) to be displayed. The value $B_v$ is used (instead of an histogram) to weight the SPD of the display device.

According to an embodiment, the blue value (Bv) is either a maximum luminance value, or a maximum content light level (MaxCLL), or a maximum frame average light (MaxFALL) value for example as computed in Annex A of document *"CEA-861.3 HDR Static Metadata Extensions",* January 2015, or a maximum content blue level (MaxCBL) or a maximum frame average blue light (MaxFABL) or a frame average blue light (FABL) - which unlike other "blue values" is valid for one frame only - computed by the following pseudo-code:

```
CalculateMaxCBL()
{
    set MaxCBL = 0
    for each (frame in the sequence)
    {
        set frameMaxBlueLevel = 0
        for each (pixel in the active image area of the frame)
        {
            convert the non-linear subpixel B' value to linear value B
              calibrated to cd/m²



            if(B> frameMaxBlueLevel)
                set frameMaxBlueLevel = B
        }
        if(frameMaxBlueLevel > MaxCBL)
            set MaxCBL = frameMaxBlueLevel
    }
    return MaxCBL
}
CalculateMaxFABL()
{
    set MaxFABL = 0
    for each (frame in the sequence)
    {
        set runningSum = 0
        for each (pixel in the active image area of the frame)
        {
            convert the non-linear subpixel B' value to linear value B
              calibrated to cd/m²
                set runningSum += B
        }
        set frameAvgBlueLevel = runningSum / nbOfPixelsInActiveImageArea
        if(frameAvgBlueLevel > MaxFABL)
            set MaxFABL = frameAvgBlueLevel
    }
    return MaxFABL
}

CalculateFABL()
{
    for each (pixel in the active image area of the frame)
    {
        convert the non-linear subpixel B' value to linear value B
          calibrated to cd/m²
            set runningSum += B
    }
    set FABL = runningSum / nbOfPixelsInActiveImageArea
    return FABL
}
```

In that case, the noxiousness value (noted $V_N''$ ) adjusted by the said blue value Bv may be defined as follows:

$$V_N'' = \sum_{i,j,k} Bv(i). V_N\left(R_i, G_j, B_k\right)$$

or as a variant:

$$V_N'' = V_N. Bv/B_N$$

where $B_N$ is a normalization factor. Typically, it is equal to 100 cd/m$^2$ for SDR content and 400 cd/m$^2$ for HDR content.

Typically, the risk $V'_N$ is lowered when the content contains fewer Bv value and inversely the risk $V'_N$ raises when the content has important Bv value.

The computed noxiousness value ($V_N$ or $V'_N$ or $V''_N$) is preferably normalized in order to be compared to a normalized threshold in the next step.

Step S3

In the step S3, the noxiousness value $V_N$ or $V'_N$ or $V''_N$ is then compared to a predetermined noxiousness threshold $T_N$. The threshold $T_N$ is a value from which the emitted light in the range of noxiousness is considered as dangerous for the human eyes. The threshold $T_N$ may be determined from clinical studies such as the report: "Comparison of IEC and ICNIRP Safety Limits with LED Exposure Levels Used in an In Vitro Study" by Karl Schulmeister, October 2015.

The threshold $T_N$ is adapted depending on whether the noxiousness value is $V_N$ or $V'_N$ or $V''_N$. This threshold may be a normalized value determined empirically.

According to an embodiment, the threshold $T_N$ depends on user parameters, such as for example the age of the user, the distance between the user and the display device i.e. viewing distance), the display device size, the maximum luminance of the display device, the exposure time in front of the display and/or or environmental viewing conditions, such as the ambient light in the room where the display device is located.

Step S4

In the step S4, if the noxiousness value $V_N$ or $V'_N$ or $V''_N$ is greater than the noxiousness threshold $T_N$, an action to reduce the light energy emitted in the range of noxiousness is performed.

According to an embodiment, this action consists in modifying the content of the video image to be displayed such that said noxiousness value $V_N$ or $V'_N$ or $V''_N$ becomes less than the noxiousness threshold $T_N$.

In this embodiment, the action may be for example a color mapping function $m$ minimizing the color adjustments. The color mapping is thus obtained by minimizing the following cost function $Cf_1$:
where:

$$Cf_1(m) = \left( T_N - \sum_{i,j,k} X(i,j,k). V_N\left(m\left(R_i, G_j, B_k\right)\right) \right)^2$$
$$+ \lambda_{cd}. \sum_{i,j,k} X(i,j,k). \left\| m\left(R_i, G_j, B_k\right) - \left(R_i, G_j, B_k\right) \right\|_2^2$$

- $X(i,j,k)$ refers to either the histogram of the content H or the value representative of blue level in the content Bv; and
- $\lambda_{cd}$ is a Lagrangian parameter defining a constraint on the colour mapping (weighting of a regularization term which minimizes color changes); and
- $m(R_i, G_j, B_k)$ represents an R, G, B triplet ($R_i, G_j, B_k$) modified by the color mapping function.

In this embodiment, the action may also be the combination of a color mapping function $m$ (typically implemented as a 3D LUT) and a white point adjusting function $W$ minimizing the color modifications. The color mapping is thus obtained by minimizing the following cost function $Cf_2$:

$$Cf_2(m) = \left(T_N - \sum_{i,j,k} X(i,j,k).V_N\left(m\left(R_i, G_j, B_k\right)\right)\right)^2 + \lambda_{Wp}.(W(wp) - wp)^2$$
$$+ \lambda_{cd}.\sum_{i,j,k} H(i,j,k).\left\|m\left(R_i, G_j, B_k\right) - \left(R_i, G_j, B_k\right)\right\|_2^2$$

where:

- $wp$ is the white point and $W(wp)$ is the adjusted white point; and
- $\lambda_{wp}$ is a Lagrangian parameter defining a constraint on the white point (regularization term which goal is to minimize white point change).

According to another embodiment, the action consists in modifying display control parameters of the display device such that said noxiousness value $V_N$ or $V'_N$ or $V''_N$ becomes less than the noxiousness threshold $T_N$; typically, such parameters are RGB gains, RGB offsets, white point or parameters of the transfer function of the display. These parameters are adjusted thanks to a constrained optimization method such as the minimization of the cost function (Lagrange multipliers optimization). The optimization method may be iterative: for instance, considering RGB gains parameters, modify the B gain by lowering it from a unit step value over the range, compute the cost function, iterate over B gain range, and select the B gain value which minimizes the cost function. This procedure may be extended to every cited parameters and selecting the parameters values which minimize the cost function.

**Figure 6** represents an exemplary architecture of a color processing module or device for implementing the steps S1 to S4. The apparatus 600 comprises one or more processor(s) 610, which is(are), for example, a CPU, a GPU and/or a DSP (English acronym of Digital Signal Processor), along with internal memory 620 (e.g. RAM, ROM, EPROM). The apparatus 600 comprises one or several Input/Output interface(s) 630 adapted to receive video content, data (for example EDID) from a target display device, user parameters, environmental parameters and to deliver video content (amended or not) and/or display control parameters to the target display device; and a power source 640 which may be external to the module 600. The module 600 may also comprise network interface(s) (not shown). The image may be obtained from a source. According to different embodiments of the invention, the source belongs to a set comprising:

- a local memory, e.g. a video memory, a RAM, a flash memory, a hard disk ;
- a storage interface, e.g. an interface with a mass storage, a ROM, an optical disc or a magnetic support;
- a communication interface, e.g. a wireline interface (for example a bus interface, a wide area network interface, a local area network interface) or a wireless interface (such as a IEEE 802.11 interface or a Bluetooth interface); and
- an image capturing circuit (e.g. a sensor such as, for example, a CCD (or Charge-Coupled Device) or CMOS (or Complementary Metal-Oxide-Semiconductor)).

According to an exemplary and non-limitative embodiment of the invention, the module 600 further comprises a computer program stored in the memory 620. The computer program comprises instructions which, when executed by the module 100, in particular by the processor 610, make the module 600 carry out the method described with reference to figure 5. According to a variant, the computer program is stored externally to the module 600 on a non-transitory digital data support, e.g. on an external storage medium such as a HDD, CD-ROM, DVD, a read-only and/or DVD drive and/or a DVD Read/Write drive, all known in the art. The module 600 thus comprises an interface to read the computer program. Further, the module 600 could access one or more Universal Serial Bus (USB)-type storage devices (e.g., "memory sticks.") through corresponding USB ports (not shown).

According to exemplary and non-limitative embodiments, the module 600 is a device, which belongs to a set comprising:

- a mobile device;
- a communication device;
- a game device;
- a tablet (or tablet computer);
- a laptop;
- a still image camera;
- a video camera;
- a still image server;
- a video server (e.g. a broadcast server, a video-on-demand server or a web server);

- a video uploading platform; and
- a display device.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example a computer, a microprocessor, an integrated circuit, or a programmable logic device.

Implementations of the various processes and features described herein may be embodied in a variety of different equipment or applications, particularly, for example, equipment or applications. Examples of such equipment include an encoder, a decoder, a post-processor processing output from a decoder, a pre-processor providing input to an encoder, a camera, a video coder, a video decoder, a video codec, a web server, a set-top box, a laptop, a personal computer, a cell phone, a PDA, and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact disc ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

## Claims

1. Method for color processing in view of displaying at least one video image on a display device, said method comprising the steps of:

   - retrieving (S1) a spectral power distribution associated with at least one group of light elements of the display device, said group of light elements displaying a color component of said at least one video image to be displayed,
   - computing (S2), in a range of said spectral power distribution, called range of noxiousness, a noxiousness value, said noxiousness value being representative of the noxiousness of the light emitted by said at least one group of light elements of the display device,
   - comparing (S3) said noxiousness value ($V_N$, $V'_N$, $V''_N$) to a bound value of noxiousness ($T_N$), and
   - if said noxiousness value ($V_N$, $V'_N$, $V''_N$) is greater than said bound value ($T_N$), modifying (S4) the content of said at least one video image or modifying (S4) display control parameters of the display device such that said noxiousness value becomes less than said bound value.

2. Method according to Claim 1, wherein said range of noxiousness is [400nm-500nm] and preferably [460nm-490nm].

3. Method according to Claim 1 or 2, wherein said at least one color component displayed by the display device is a blue component.

4. Method according to Claim 1 or 2, wherein said at least one color component displayed by the display device is a blue component, a red component and a green component.

5. Method according to any one of Claims 1 to 4, wherein said noxiousness value ($V_N$) is based on the energy level of the light emitted by said at least one group of light elements of the display device.

6. Method according to any one of Claims 1 to 4, wherein said noxiousness value ($V'_N$, $V''_N$) is based on the energy level of the light emitted by said at least one group of light elements of the display device and on the content of said at least one video image.

7. Method according to Claim 6, wherein the noxiousness value ($V'_N$) is based on histograms of color values associated with said at least one color component in said at least one video image.

8. Method according to Claim 6, wherein, said at least one video image being part a global video content, the noxiousness value ($V'_N$) is based on histograms of color values associated with said at least one color component in said global video content.

9. Method according to any one of preceding claims, wherein said bound value ($T_N$) is depending on user parameters and/or environmental viewing conditions.

10. Method according to any one of preceding claims, wherein the step of modifying the content of said at least one video image comprises modifying the colors of said at least one video image and/or adjusting the white point of said at least one video image.

11. Method according to any one of preceding claims, wherein the step of retrieving a spectral power distribution associated with at least one color component displayed by the display device comprises:

   - receiving spectral power distribution data modelling said spectral power distribution associated with at least one color component displayed by the display device; and
   - regenerating said spectral power distribution based on said spectral power distribution data.

12. Method according Claim 10, wherein said spectral power distribution data are one of the following data:

   - a histogram representation;
   - a Gaussian Mixture Model;
   - a mixture of Bezier curves; and
   - a mixture of B-Splines.

13. Device for color processing in view of displaying at least one video image on a display device, said device being configured to:

   - retrieve a spectral power distribution associated with at least one group of light elements of the display device, said group of light elements displaying a color component of said at least one video image to be displayed,
   - compute, in a range of said spectral power distribution, called range of noxiousness, a noxiousness value, said noxiousness value being representative of the noxiousness of the light emitted by said at least one group of light elements of the display device,
   - compare said noxiousness value ($V_N$, $V'_N$) to a bound value of noxiousness ($T_N$), and
   - if said noxiousness value ($V_N$, $V'_N$) is greater than said bound value ($T_N$), modify the content of said at least one video image or modify display control parameters of the display device such that said noxiousness value becomes less than said bound value.

14. Computer program product comprising program code instructions for implementing the method according to any one of claims 1 to 12, when said program is executed on a computer or a processor

15. Video signal comprising spectral power distribution associated with at least one group of light elements of the display device, said group of light elements displaying a color component of said at least one video image to be displayed.

FIG.1

Intended picture                                    Hue-shifted picture

FIG.2

**FIG.3**

**FIG.4**

| | |
|---|---|
| S1 | Retrieving a spectral power distribution (SPD) of at least one group of light elements of the display device |

↓

| | |
|---|---|
| S2 | Computing, in a predetermined range of said SPD, a noxiousness value |

↓

| | |
|---|---|
| S3 | Comparing the noxiousness value to a noxiousness threshold |

↓

| | |
|---|---|
| S4 | if the noxiousness value is greater than the noxiousness threshold, modifying the content of said at least one video image or modifying display control parameters of the display |

**FIG.5**

630 — I / O    Memory — 620

600

Processor — 610

640

Power source

**FIG.6**

Europäisches
Patentamt

European
Patent Office

Office européen
des brevets

# EUROPEAN SEARCH REPORT

Application Number

EP 18 30 5760

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/069551 A1 (BUES MATTHIAS [DE] ET AL) 22 March 2012 (2012-03-22) <br> * par. 10-27, 35, 36, 42, 44, 45, 57-60 <br> fig. 1-3, 6 * <br> ----- | 1-15 | INV. <br> G09G3/32 |

TECHNICAL FIELDS
SEARCHED (IPC)

G09G

The present search report has been drawn up for all claims

| Place of search | Date of completion of the search | Examiner |
|---|---|---|
| Munich | 15 August 2018 | Bader, Arnaud |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 18 30 5760

This annex lists the patent family members relating to the patent documents cited in the above-mentioned European search report.
The members are as contained in the European Patent Office EDP file on
The European Patent Office is in no way liable for these particulars which are merely given for the purpose of information.

15-08-2018

| Patent document cited in search report | | Publication date | Patent family member(s) | | Publication date |
|---|---|---|---|---|---|
| US 2012069551 | A1 | 22-03-2012 | CN | 102301410 A | 28-12-2011 |
| | | | DE 202009018852 U1 | | 26-11-2013 |
| | | | EP | 2380161 A1 | 26-10-2011 |
| | | | JP | 2012513616 A | 14-06-2012 |
| | | | KR | 20110098845 A | 01-09-2011 |
| | | | US | 2012069551 A1 | 22-03-2012 |
| | | | WO | 2010072415 A1 | 01-07-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KARL SCHULMEISTER.** *Comparison of IEC and ICNIRP Safety Limits with LED Exposure Levels Used in an In Vitro Study,* October 2015